# EUROPEAN PATENT APPLICATION

(11) **EP 1 365 145 A2**
(43) Date of publication of application: **26.11.2003**
(21) Application number: 03007279.7
(22) Date of filing: 31.03.2003
(51) Int. Cl.: F02N 17/08, F02N 11/08

(54) **Engine starting apparatus**

(30) Priority: 22.05.2002 JP 2002147619
(71) Applicant: HONDA GIKEN KOGYO KABUSHIKI KAISHA, Minato-ku Tokyo (JP)
(72) Inventor: Ota, Atsuo, Wako-shi, Saitama (JP); Nagatsuyu, Toshiya, Wako-shi, Saitama (JP)
(74) Representative: Liska, Horst, Dr.-Ing.

(57) **Abstract**

The invention allows an accurate positioning to obtain a large inertia torque at starting. Especially, it prevents retrogradation that may occur when rotating an engine in the reverse direction by a motor and shutting down for positioning.

At starting, the motor is energized by a first reverse rotation unit 111 to rotate the engine in the reverse direction to the position in the vicinity of the top dead center. After reverse rotation by the first reverse rotation unit 111, a second reverse rotation unit 113 energizes the engine further in the direction of reverse rotation with a small torque while reducing an exciting current to the motor. The exciting current is set to a degree that can obtain a braking effect for reducing retrogradation that may occur when the engine is stopped at a predetermined position within a high-load region after being rotated in the reverse direction. A stop position is set in advance between the top dead center on the compression stroke immediately before and the range of opening and closing operation of an exhaust valve, and whether or not the engine has reached the stop position may be recognized by a crank angle.

## Description

The present invention relates to an engine starting apparatus and, more specifically, to an engine starting apparatus that can get over the high-load region on the compression stroke easily even with a starter motor with a low torque.

On the compression stroke of an engine, a large load is exerted on a starter motor. Since the area before the top dead center is especially a high-load region, the starter motor is required to have a torque that can get over such high-load region. In the related art, it has been contemplated to rotate a crankshaft in the reverse direction to a light-load region in the direction of normal direction at starting, that is, to the area before the top dead center in the direction of reverse direction, and then, from that position, to rotate in the normal direction. Starting the engine from such light-load region enables to sufficiently utilize inertia of the engine to improve starting capability thereof.

However, since the position where the crankshaft stops after reverse rotation may vary due to variations in engine friction affected by variations in temperature of engine oil or the like, the crankshaft cannot be stopped accurately at a desired light-load position. In order to solve such disadvantage, for example, JP-A-20000-303938 discloses an engine starting apparatus in which friction is estimated based on the temperature of the engine, and the time period of reverse rotation is elongated when the friction is high, and the time period of reverse rotation is shortened when the friction is low.

In the aforementioned apparatus in the related art, since the time period of reverse rotation has to be determined in accordance with the position where the crankshaft starts rotation in the reverse direction, detection of rotational position of the crankshaft may be complicated. In addition, since the light-load position at which the crankshaft is stopped after reverse rotation is before the top dead center, retrogradation in the normal direction may occur after energization of the motor in the reverse direction is suspended. When such retrogradation is significant, it is difficult to stop the crankshaft accurately at the desired position, and thus it is impossible to improve starting capability by the sufficient use of inertia.

In view of such requirements, it is an object of the present invention to provide an engine starting apparatus that can generate large inertia energy at starting by allowing the crankshaft to stop at a desired position with a reduced degree of retrogradation without employing such complex construction that the time period of the reverse rotation is determined in accordance with the position to start the reverse rotation.

In order to achieve the above-described object, the first characteristic of the present invention is a control unit for starting the starter motor for allowing the engine to shut down after being rotated in the reverse direction to a position predetermined between the top dead center on the compression stroke immediately before and the range of opening and closing operation of an exhaust valve in response to engine starting operation.

The second characteristic of the present invention is a control unit for starting the starter motor for allowing the engine to shut down after being rotated in the reverse direction to a position predetermined between the top dead center on the compression stroke immediately before and the range of opening and closing operation of the exhaust valve when shutting down the engine.

Furthermore, the third characteristic of the present invention is that the aforementioned control unit is adapted to rotate the engine in the reverse direction to the aforementioned position, and then driving the aforementioned starter motor at a low torque to energize the aforementioned engine into the direction of reverse rotation.

The fourth characteristic of the present invention is a unit for determining the fact that the engine is rotated to the aforementioned position in the reverse direction by the fact that a current being carried in the aforementioned starter motor exceeds a predetermined value.

The fifth characteristic of the present invention is a detecting unit for determining the fact that the engine is rotated to the aforementioned position in the reverse direction is determined by the fact that the speed of change in crank angle is lowered to a predetermined value based on change in crank angle detected by the aforementioned crank angle detecting unit.

According to the first and the second characteristics, the engine may be shut down after being rotated in the reverse direction to the position set in the high-load region in the vicinity of the top dead center on the compression stroke. Especially, according to the first characteristic, the engine may be rotated in the reverse direction to the high-load region in association with starting operation. On the other hand, according to the second characteristic, since the engine may be rotated in the reverse direction to the high-load region in association with shutting down of the engine, starting capability of the engine at the next starting operation may be improved.

According to the third characteristic, retrogradation of the engine occurring when energization is released in the high-load region may be prevented by allowing the engine to rotate in the reverse direction and stop at the predetermined position and subsequently energizing the starter motor in the direction of reverse rotation of the engine. Since the starter motor may be driven with a low output torque, it only prevents retrogradation from occurring but does not rotate the engine to the higher load region with respect to the position at which the reverse rotation is stopped. Only retrogradation is prevented, and thus the engine will never rotated to the higher load region than the stop position, so that the engine can be stopped accurately at the desired position.

Furthermore, according to the fourth characteristic, the fact that the engine reaches the predetermined position may be determined by a simple structure that detects the fact that a carried current exceeds the predetermined value. According to the fifth characteristic, the fact that the engine is rotated in the reverse direction to the predetermined position when the angular velocity that can be obtained from the output of a crank angle detecting unit is decelerated to the predetermined value.

Preferred embodiments of the invention will be explained in reference to the attached drawings.
Fig. 1 is a block diagram showing functions of a principal portion for engine stop control.
Fig. 2 is a whole side view of a motorcycle to which the present invention is applied.
Fig. 3 is a cross sectional view taken along the line A-A in Fig. 2.
Fig. 4 is a partially enlarged view of Fig. 3.
Fig. 5 is a block diagram of an electrical system including the ACG starter.
Fig. 6 is a drawing showing the relation between the angular position of the crank and the get-over torque at starting of the engine.
Fig. 7 is a drawing showing operation of normal rotation and reverse rotation for every different reverse rotation starting position.
Fig. 8 shows operation of normal rotation and reverse rotation in the related art.
Fig. 9 is a flowchart of reverse-rotation-at-starting.
Fig. 10 is a flowchart of reverse-rotation-at-shutdown.

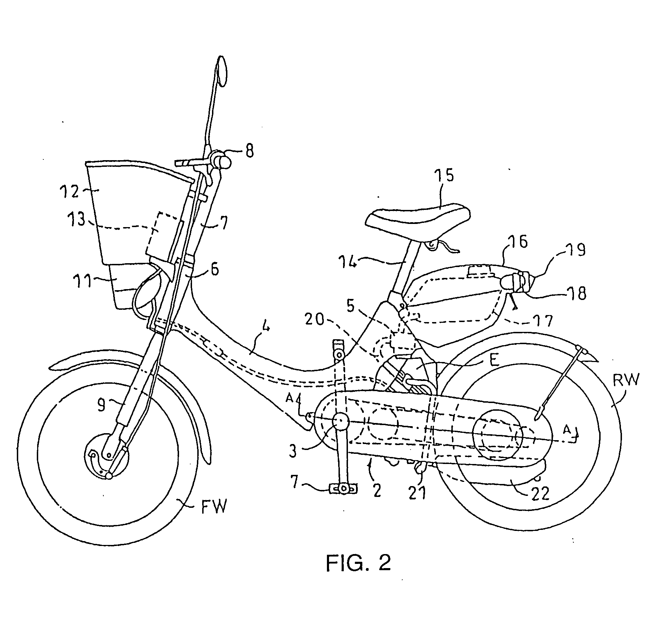

Referring now to the drawings, the present invention will be described in detail. Fig. 2 is a side view of a motorcycle with a pedal to which an engine starting apparatus according to the present invention is applied. In the same figure, a power unit 2 is suspended from a vehicle body frame 4. The power unit 2 includes a four-cycle engine E and a force-on-pedal drive unit mounted at the front portion thereof, and a rear wheel RW supported at the rear portion thereof. Furthermore, the power unit 2 includes a power transmission and a velocity reducer disposed between the engine E and the rear wheel RW for transmitting the output of the engine E to the rear wheel RW after changing and reducing the velocity thereof (that will be described in detail later). The force-on-pedal drive unit is a drive system provided separately from an engine drive system since it drives the rear wheel RW by a manpower (a force on pedal), and is provided with a pedal shaft 3 and a pedal 7 as force-on-pedal input means.

A steering shaft 7 is rotatably supported in a head pipe 6 formed at the front portion of the vehicle body frame 4, and a handle 8 extending laterally is attached at the top of the steering shaft 7. A front fork 9 is connected to the lower portion of the steering shaft 7. A front wheel is supported at the lower end of the front fork 9. A headlight 11, a basket for baggage 12, and a buttery 13 are provided forwardly of the steering shaft 7 and the head pipe 6.

A seat post 14 is mounted rearwardly of the vehicle body frame 4, and a seat 15 is mounted on the seat post 14, which extends upward and slightly rearward. A storage case 16 is provided below the rear portion of the seat 15, and a fuel tank 17, an air cleaner (not shown), and the like are stored in the storage case 16. Furthermore, turn signal lights 18 and the rear indicator lamp 19 are mounted at the rear portion of the storage case 16.

A carburetor 5 is mounted above the engine E, and the fuel tank 17 and the air cleaner are connected to the carburetor 5. Fuel mixed with air in the carburetor 5 is supplied through an intake pipe 20 to the engine E. An exhaust pipe 21 is connected to the engine E, and exhaust air from the engine E is discharged through the exhaust pipe 21 and a muffler 22 rearward.

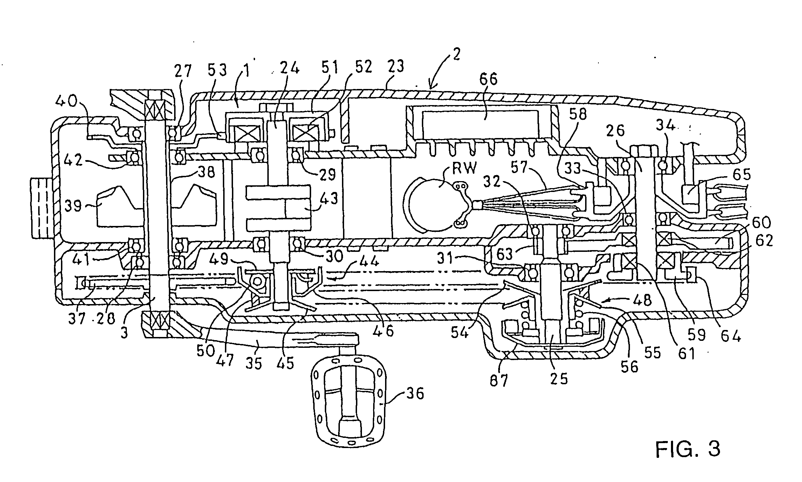

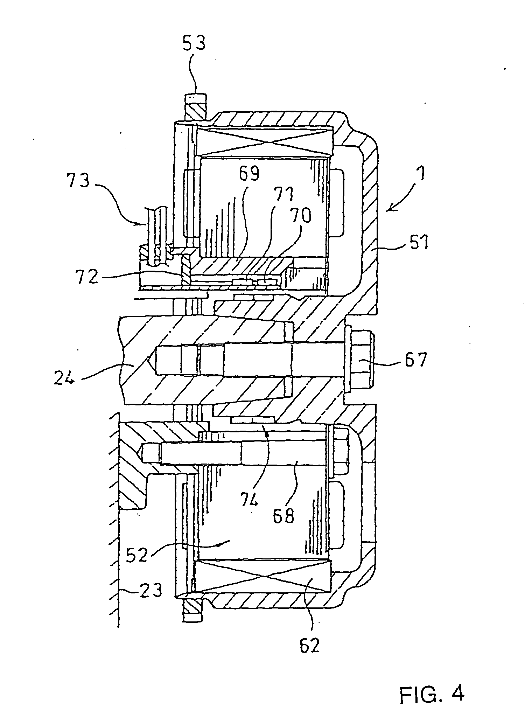

Fig. 3 is a cross sectional view taken along the line A-A in Fig. 2 and Fig. 4 is a partially enlarged view of Fig. 2. The power unit 2 includes the pedal shaft 3 supported by a unit case 23, a crankshaft 24 of the engine E, an intermediate shaft 25, and a rear axle 26. The pedal shaft 3 is supported by the unit case 23 via bearings 27 and 28, and the crankshaft 24 is supported by the unit case 23 via bearings 29 and 30. The intermediate shaft 25 and the rear axle 26 are supported by the unit case 23 via bearings 31 and 32 and bearings 33 and 34 respectively. A crank 35 is connected to both ends of the pedal shaft 3, and a pedal 36 is attached to the distal end of the crank 35. A drive sprocket 37 for transmitting a force-on-pedal is connected to the pedal shaft 3. In addition, a cooling fan 39 and a gear 40 for rotating the cooling fan are provided on the force-on-pedal crankshaft 3 via a sleeve 38. The sleeve 38 is supported by the unit case 23 via bearings 41 and 42.

A connecting rod 43 is connected to the crankshaft 24 via a crank pin, not shown. A belt drive pulley 44 of a belt-type continuous transmission is rotatably mounted at one end of the crankshaft 24. The belt drive pulley 44 includes a fixed pulley unit 45 and a movable pulley unit 46. The fixed pulley unit 45 is secured to the crankshaft 24, and the movable pulley unit 46 is spline-fitted to the crankshaft 24 so as to be capable of displacing in the axial direction. A V-belt 47 is put around the belt drive pulley 44, and the V-belt 47 is also put around a belt-driven pulley 48.

A cam plate 49 is secured to the crankshaft 24 adjacent to the movable pulley unit 46. The outside of the movable pulley unit 46, that is, the side which does not come into contact with the V-belt, has a tapered surface the portion near the outer periphery of which inclines toward the cam plate 49 side, and a dry weight 50 is stored in a space between the tapered surface and the movable pulley unit 46.

An outer rotor 51 of a starter & power generator (ACG starter) 1 including a starter motor and an AC generator assembled together is connected to the other end of the crankshaft 24. A stator 52 to be fixed to the unit case 23 is provided on the inner side of the outer rotor 51. A gear 53 is provided on the outer periphery of the outer rotor 51, and the gear 53 engages the aforementioned gear 40 to provide a driving force to the cooling fan 39. Detailed description of the ACG starter 1 will be provided later.

The driven pulley 48 provided on the intermediate shaft 25 also includes a fixed pulley unit 54 and a movable pulley unit 55 as in the case of the drive pulley 44. The fixed pulley unit 54 is connected to the intermediate shaft 25, and the movable pulley unit 55 is spline-fitted to the fixed pulley unit 54 so as to be capable of displacing in the direction of " the axis of the intermediate shaft 25. The movable pulley unit 55 is urged by a spring 56 in the direction to reduce the distance with respect to the fixed pulley unit 54. A centrifugal clutch 87 for engaging the driven pulley 48 and the intermediate shaft 25 is provided at the end of the intermediate shaft 25.

A hub 58 for supporting the rear wheel RW via a spoke 57 is connected to the rear axle 26. A driven sprocket 59 is mounted to an end of the rear axle 26, and a reduction gear 60 is also mounted thereto on the inner side of the driven sprocket 59 via one-way clutches 61 and 62 respectively. The reduction gear 60 engages a pinion 63 connected to the intermediate shaft 25. The intermediate shaft 25 or the rear axle 26 is provided on the periphery thereof with a sensor (not shown) for detecting the number of revolutions of these shafts. This sensor is used as a sensor for detecting the vehicle velocity. The driven sprocket 59 is connected to the drive sprocket 37 via a chain 64. A brake 65 engages the inside of the hub 58.

A control unit 66 for the ACG starter 1 is stored in the unit case 23. Since the control unit 66 is provided with a rectifier element, it is attached to the portion of the case provided with a fin for cooling.

When the pedal 36 is worked and hence the pedal shaft 3 is rotated, the drive sprocket 37 rotates, and rotation of the drive sprocket 37 is transmitted to the driven sprocket 59 by the chain 64. Rotation of the driven sprocket 59 is transmitted to the rear axle 26 via the one-way clutch 61. When working on the pedal 36 is stopped, no force-on-pedal is provided to the rear axle 26. However, since the one-way clutch 61 allows rotation of the rear wheel RW in the direction of travel even when the driven sprocket 59 is stopped, the rear wheel RW may be rotated by inertia.

The engine E is started by the ACG starter 1. When a current is supplied from the aforementioned battery 13 through the control unit 66 to the stator 52 of the ACG starter 1, the outer rotor 51 rotates, and the engine E is started. When the engine E is started once, the ACG starter 1 serves as an electric generator. The gear 40 is rotated by rotation of the outer rotor 51 via the gear 53, whereby the cooling fan 39 is energized.

When the engine E rotates and the rotational velocity of the crankshaft 24 increases, the dry weight 50 moves in the radial direction by a centrifugal force. Accordingly, the movable pulley unit 46 is displaced by being pressed by the dry weight 50, and hence approaches to the fixed pulley unit 45. As a consequence, the V-belt 47 moves toward the outer periphery of the pulley 44, and the winding diameter increases.

When the winding diameter of the V-belt 47 around the drive pulley 44 increases, the movable pulley unit 55 of the driven pulley 48 provided at the rear portion of the vehicle is displaced accordingly. In other words, the movable pulley unit 55 is displaced against the spring 56 so that the winding diameter of the V-belt 47 around the driven pulley 48 reduces. In this manner, the power of the engine E is adjusted automatically and transmitted to the intermediate shaft 25, and when the rotational velocity of the driven pulley 48 increases, the rotation thereof is transmitted to the intermediate shaft 25 by the centrifugal clutch 87. Rotation of the intermediate shaft 25 is reduced in velocity by the reduction gears 63 and 60 and transmitted to the rear axle 26. When the engine E is shut down, no power of engine E is provided to the rear axle 26. However, since the one-way clutch 62 allows rotation of the rear wheel RW in the direction of travel even when the gear 60 stopped rotating, the rear wheel RW may be rotated by inertia.

In Fig. 4, in the ACG starter 1, the outer rotor 51 is fixed to the tapered portion at the tip of the crankshaft 24 by a bolt 67. The stator 52 disposed on the inner peripheral side of the outer rotor 51 is fixed to a boss of the unit case 23 by a bolt 68. A sensor case 69 is fitted into the inner periphery of the stator 52. A rotor angle sensor (magnetic pole sensor) 70 and the pulsar sensor (ignition pulsar) 71 are provided in the sensor case 69 along the outer periphery of the boss of the outer rotor 51 at regular intervals.

The rotor angle sensor 70 is for performing current-carrying control for the stator coil of the ACG starter 1. The ignition pulsar 71 is for controlling ignition of the engine E, and is provided only one. The rotor angle sensor 70 and the ignition pulsar 71 may be constructed of a Hall IC or the magnetoresistive (MR) elements and the like.

The leads of the rotor angle sensor 70 and the ignition pulsar 71 are connected to a substrate 72, and a wire harness 73 is also connected to the substrate 72. A magnet ring 74, which is magnetized into two-stages so as to exert magnetic . effect on the rotor angle sensor 70 and the ignition pulsar 71 respectively, is fitted into the outer periphery of the boss of the outer rotor 51.

One of the magnetized bands on the magnet ring 74 corresponding to the rotor angle sensor 70 is formed with N-poles and S-poles arranged alternately at intervals of 30° in the circumferential direction corresponding to the magnetic poles of the stator 52, and the other magnetized band of the magnet ring 74 corresponding to the ignition pulsar 71 is formed at one position with a magnetized portion extending in the range of 15° to 40° in the circumferential direction.

The ACG starter 1 serves as a starter motor (synchronous motor) when starting the engine, and starts the engine E by rotating the crankshaft 24 by a current supplied from the buttery. After the engine has started, it serves as a synchronous power generator and charges the buttery by a generated current and simultaneously supplies currents to each electrical component.

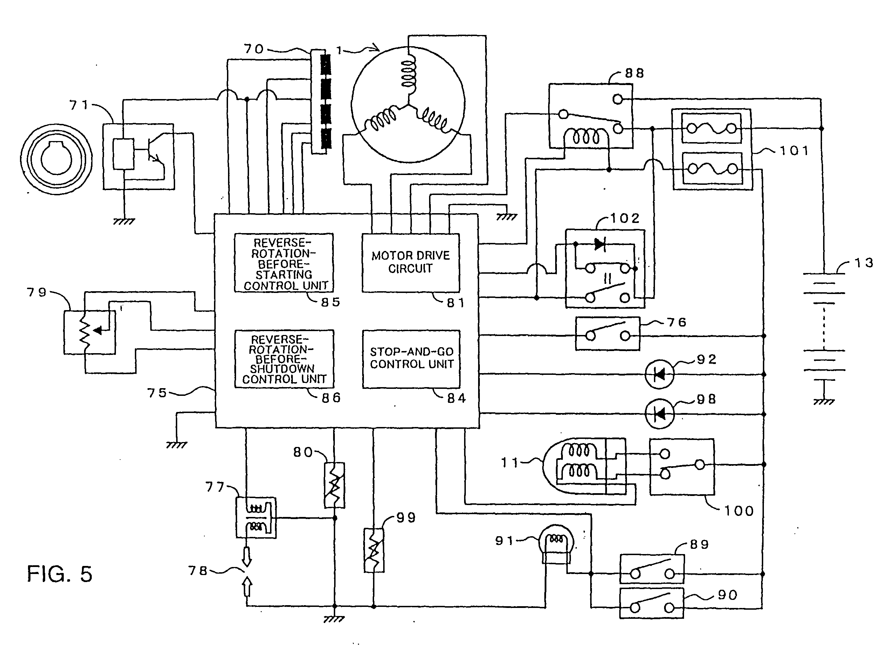

Fig. 5 is a block diagram of an electrical system including the ACG starter 1. The ECU 75 provided in the control unit 66 includes a motor drive circuit 81. The motor drive circuit 81 is constructed, for example, of a MOS-FET, and performs full-wave rectification on three-phase alternating current generated by the ACG starter 1, and then supplies a current from the buttery 13 to the ACG starter 1 when making the ACG starter 1 function as a motor.

The rotor angle sensor 70, the ignition pulsar 71, a throttle sensor 79, and an oil temperature sensor 80 are connected to the ECU 75, and detected signals from each sensor is supplied to the ECU 75. An ignition coil 77 is connected to the ECU 75, and an ignition plug 78 is connected to the secondary side of the ignition coil 77.

Furthermore, a starter switch 76, a starter relay 88, stop switches 89 and 90, a stop light 91, a stand-by indicator 92, a buttery indicator 98, a motorcycle starter 99 and a headlight 11 are connected to the ECU 75. A dimmer switch 100 is provided on the headlight 11.

Current is supplied from the buttery 13 to the aforementioned parts via a main fuse 101 and a main switch 102. While the buttery 13 is directly connected to the ECU 75 via the starter relay 88, it has a circuit connected to the ECU 75 only via the main fuse 101, but not via the main switch 102.

The ECU 75 is provided with a stop-and-go control unit 84, a staring reverse rotation control unit 85 and a reverse-rotation-at-shutdown control unit 86. The stop-and-go control unit 84 controls idling, automatic shutdown, and restarting of the engine. The reverse-rotation-at-starting control unit 85 rotates the crankshaft 24 in the reverse direction to a predetermined position when the engine is started by the starter switch 76, and then rotates the same in the normal direction. The reverse-rotation-at-shutdown control unit 86 rotates the crankshaft 24 in the reverse direction to a predetermined position when the engine is automatically shut down. Such reverse rotation control units 85 and 86 are provided for improving starting capability of the engine for the next time. To rotate the crankshaft 24 in the reverse direction for the subsequent starting in such a manner is referred to as "swing back".

The stop-and-go control unit 84 shutdowns the engine automatically when the vehicle is brought to a halt, or when predetermined conditions for shutting down are satisfied during travel, and drives the ACG starter 1 automatically and restarts the engine when the restarting conditions such that the throttle valve is opened are satisfied after the automatic shutdown of the engine.

Swing back operation will now be described. The reverse-rotation-at-starting control unit 85 of the ECU 75 rotates the crankshaft 24 in the reverse direction once to the position where the load torque in normal rotation is low when starting the engine by the starter switch 76, and subsequently, drives the ACG starter 1 further in the normal direction to start the engine E. Following operations will be made until starting the engine. In a first place, the crankshaft 24 is rotated in the reverse direction until the stop position set in the range immediately before the top dead center and within the range of opening and closing operation of the exhaust valve. The stop position is set to the position where the exhaust valve is opened for discharging the air after the exploding stroke is terminated, that is, the position at which the load for rising a piston to the top dead center increases after the exhaust valve is closed when viewed in the direction of reverse rotation. Operation in detail will be described later.

Subsequently, the ACG motor 1 is energized in the direction of reverse rotation with a smaller output than the reverse rotation to the aforementioned stop position. By the latter energization into the direction of reverse rotation, the crankshaft 24 may be stopped at the desired position by preventing retrogradation occurring when the reverse rotation is stopped.

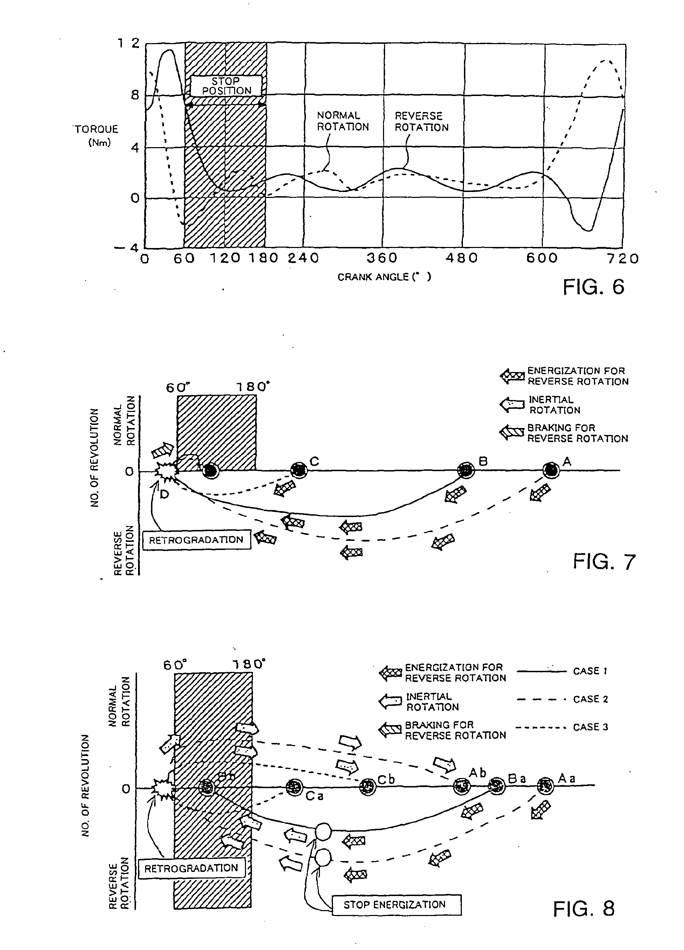

Referring now to the drawings, this action will be described. Fig. 6 is a drawing showing the relation between the cranking torque and the crank angle. As shown in the figure, the cranking torque shows the maximum value in the vicinity of the top dead center, that is, crank angles of 0° and 720° respectively. The position showing the maximum cranking torque and the position showing the minimum cranking torque are the other way around between the normal rotation and the reverse rotation. In other words, the position showing the maximum cranking torque during reverse rotation substantially coincides with the position showing the minimum cranking torque during normal rotation. Therefore, if the crankshaft 24 can be stopped in the range from the position showing the minimum cranking torque toward the direction of the normal rotation, starting of the normal rotation can be performed easily and a large rotational angle may be secured between the rotational angle and the position showing the maximum cranking torque. As a consequence, the engine can get over the top dead center with a large inertia torque.

Therefore, in the present invention, in order that the final stop position for starting shall reside in the crank angle range between 60° and 180°, the stop position is set between this range and the top dead center on the compression stroke with retrogradation taken into account. When the crank angle is about 60° on the explosion stroke, the exhaust valve starts to open, and when the crank angle is about 180°, the exhaust valve opens completely. In other words, the range of the aforementioned crank angle between 60° and 180° corresponds to the period in which the exhaust valve is performing opening and closing operation.

Fig. 7 is a drawing showing the relation between the crank angle and the number of revolution of the ACG motor 1. In the same figure, reverse rotation of the crankshaft 24 is started from positions A, B, and C, and drive for reverse rotation is stopped at a stop position D. When drive for reverse rotation is stopped at the stop position D, the crankshaft 24 cannot be stopped within an expected stop range due to retrogradation. Therefore, in order to prevent retrogradation when rotating the crankshaft 24 in the reverse direction to the stop position D and stopping there, the ACG motor 1 is rotated in the reverse direction. Only a small torque that is sufficient to set up against retrogradation must simply be supplied from the ACG motor 1 in this reverse rotation. Accordingly, large retrogradation is prevented, and thus the crankshaft 24 stops at a final stop position F within the expected stop range.

Fig. 8 shows starting operation in the related art. When starting reverse rotation of the crankshaft 24 from the positions Aa, Ba and Ca and stopping reverse rotation at a predetermined position, retrogradation corresponding to the distance between the positions Aa, Ba and Ca and the stop position occurs, and consequently, the crankshaft 24 finally stops at the positions Ab, Bb and Cb, respectively. When rotating the crankshaft 24 in the reverse direction from the position Ca, which is at a short distance away from the stop position, the crankshaft 24 stops within a desired stop range since retrogradation is small. However, when rotating the crankshaft 24 in the reverse direction from other positions, the crankshaft 24 does not stop within the desired stop range since retrogradation is significantly large. According to the present invention, such unstableness in the related art is solved and the crankshaft 24 can always be stopped accurately within the desired range.

The fact that the crankshaft 24 reaches the expected position may be determined based on the crank angle that can be detected by the rotor angle sensor 70.

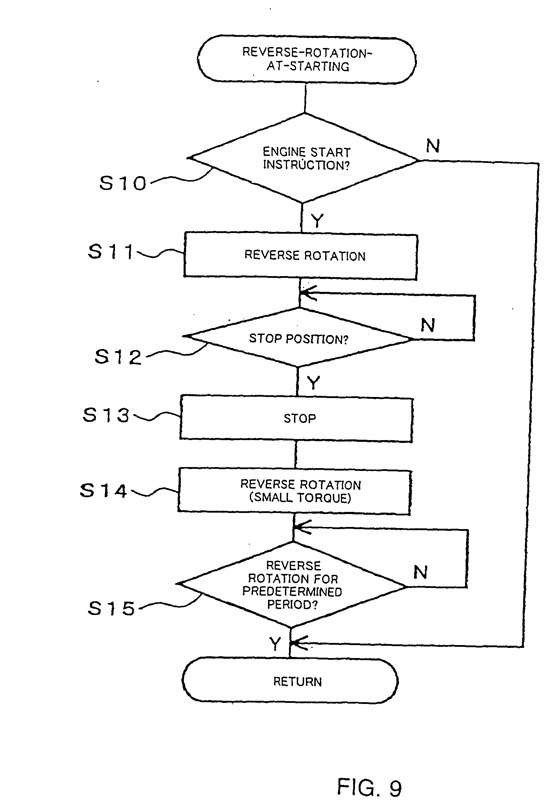

Subsequently, reverse-rotation-at-starting control will be described. Fig. 9 is a flowchart of reverse-rotation-at-starting control. In Step S10, whether or not an instruction to start the engine has made is determined. When the starter switch 76 is turned ON, Step S10 is affirmative, and the procedure goes to Step S11. In Step S11, the crankshaft 24 rotates in the reverse direction. In Step S12, whether or not the crankshaft 24 has rotated in the reverse direction to the stop position is determined. The stop position is set to a position 60° advanced from the top dead center (crank angle 0°).

If Step S12 is affirmative, the ACG motor 1 is stopped driving in Step S13. In Step S14, the ACG motor 1 is driven so as to rotate the crankshaft 24 again in the reverse direction. In this rerotation in the reverse direction, ON-duty of a MOS-FET that constitutes a motor drive circuit 81 for controlling the ACG motor 1 is reduced to the value smaller than that during the reverse rotation to the stop position, so that an output torque is reduced. In Step S15, whether or not reverse rotation with a small output torque has made for a predetermined period is determined. If the result of the determination is affirmative, energization of the ACG motor 1 is stopped to terminate the reverse rotation at starting.

Reverse rotation control may be performed not only when starting the engine, but also when shutting down the engine. For example, in the stop-and-go control, ignition operation must be made immediately after the throttle valve is opened. Therefore, by making reverse rotation of the crankshaft 24 for subsequent starting when shutting down the engine under the stop-and-go control so that ignition operation is quickly performed in response to the action to open the throttle valve, the engine can be started quickly when at the next starting operation.

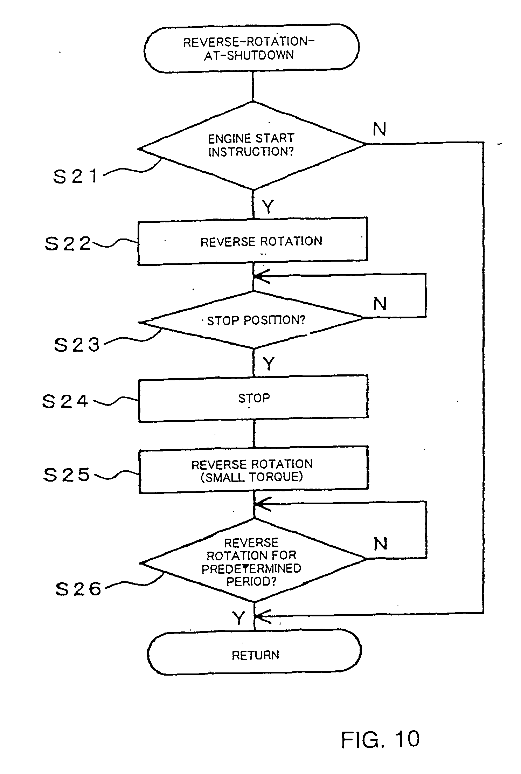

Fig. 10 is a flowchart of reverse-rotation-at-shutdown control. In Step S21, whether or not the engine has shut down is determined. When the engine has shut down, Step S21 is affirmative, and thus the procedure goes to Step S22. In Step S22, the crankshaft 24 rotates in the reverse direction. In Step S23, whether or not the crankshaft 24 has rotated in the reverse direction to the stop position is determined. If Step S23 is affirmative, the ACG motor 1 is stopped driving in Step S24. In Step S25, the ACG motor 1 is driven so that the crankshaft 24 is rotated in the reverse direction again. Reducing the ON-duty of the MOS-FET constituting the drive circuit 81 during this rerotation is the same as in the case of the reverse-rotation-at-starting control. In Step S26, whether or not reverse rotation with a small output torque has made for a predetermined time period is determined. If the result of this determination is affirmative, energization of the ACG motor 1 is stopped to terminate the reverse rotation at shutdown of the engine.

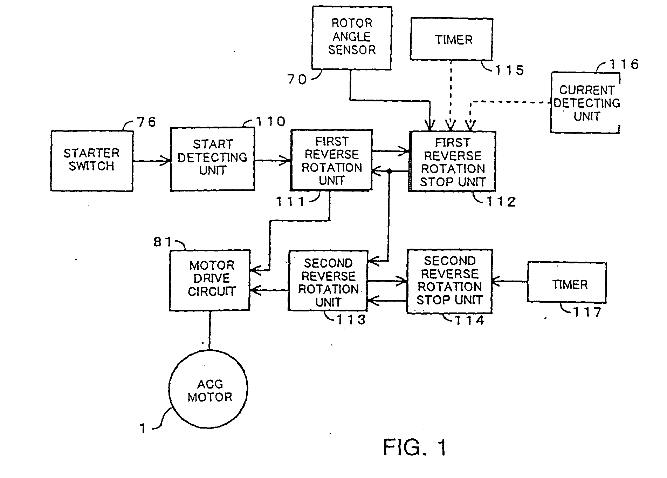

Fig. 1 is a block diagram showing functions for reverse-rotation-at-shutdown control and for reverse-rotation-at-starting control. A start detecting unit 110 detects that the starter switch 76 is turned on, and thus detects that engine starting operation has made, and then energizes the first reverse rotation unit 111. The first reverse rotation unit 111 supplies an instruction to the motor drive circuit 81 to rotate the ACG motor 1 in the reverse direction. In response to this instruction, the ACG motor 1 rotates in the reverse direction. Upon start of reverse rotation, the first reverse rotation stop unit 112 observes whether or not the crankshaft 24 has rotated to the expected stop position, and when the crankshaft 24 is rotated to the stop position, an instruction to stop reverse rotation is supplied to the first reverse rotation unit 111. Whether or not the crankshaft 24 has rotated to the stop position may be determined based on the crank angle that can be recognized from the output of the rotor angle sensor 70.

Since the interval of the output signals from the crank angle sensor 70, that is, the crank pulse interval is a function of the angular speed of the crankshaft 24, the first reverse rotation stop unit 112 may be adapted to be capable of determining whether or not the position of the crankshaft 24 has reached the reverse rotation stop position based on the length of the crank pulse interval. In other words, since the crank angle speed reduces in the high-load region, the fact that the crankshaft 24 reaches the high-load region may be determined by detecting that the angular speed has reduced to a predetermined value.

Such determination may be made by other methods, such as observing the fact that reverse rotation has been made for a predetermined time period by a timer 115, and observing the fact that the current value of the ACG motor 1 has risen to a lock current by a current detecting unit 116. The crankshaft 24 may be stopped at a stop position within the high-load region by setting a time period which is longer than the expected time period of reverse rotation to the stop position, and rotating the crankshaft 24 with a torque smaller than the get-over torque at the top dead center in the reverse direction for that time period. In this case, the ACG motor 1 is driven with a small torque that does not allow the crankshaft 24 to get over the top dead center even when the crankshaft 24 has reached the high-load region before the preset time period has elapsed. Since the lock current is flown to the ACG motor 1 when reaching the high-load region, the crankshaft 24 can be stopped at the stop position in the high-load region by shutting down the ACG motor 1 when the lock current is detected.

The instruction to stop reverse rotation emitted from the first reverse rotation stop unit 112 is supplied to the second reverse rotation unit 113 as a reverse rotation instruction for preventing the second reverse rotation, that is, retrogradation. The second reverse rotation unit 113 supplies to the motor drive circuit 81 an instruction to rotate the ACG motor 1 in the reverse direction with a smaller torque than the reverse rotation made by the instruction from the first reverse rotation unit 111. Upon start of reverse rotation made by the instruction from the second reverse rotation unit 113, the second reverse rotation stop unit 114 observes whether or not the predetermined time period has elapsed by a timer 117, and when the predetermined time period has elapsed, supplies a reverse rotation stop instruction to the second reverse rotation unit 113.

In the aforementioned embodiment, the present invention is applied to an engine starting apparatus to be mounted on a motorcycle with pedals. However, the present invention is not limited to the aforementioned embodiment, and may be applied widely to four-cycle engines that are required to be started while getting over the high-load region on the compression stroke.

The invention allows an accurate positioning to obtain a large inertia torque at starting. Especially, it prevents retrogradation that may occur when rotating an engine in the reverse direction by a motor and shutting down for positioning.

At starting, the motor is energized by a first reverse rotation unit 111 to rotate the engine in the reverse direction to the position in the vicinity of the top dead center. After reverse rotation by the first reverse rotation unit 111, a second reverse rotation unit 113 energizes the engine further in the direction of reverse rotation with a small torque while reducing an exciting current to the motor. The exciting current is set to a degree that can obtain a braking effect for reducing retrogradation that may occur when the engine is stopped at a predetermined position within a high-load region after being rotated in the reverse direction. A stop position is set in advance between the top dead center on the compression stroke immediately before and the range of opening and closing operation of an exhaust valve, and whether or not the engine has reached the stop position may be recognized by a crank angle.

## Claims

1. An engine starting apparatus comprising:
a starter motor (1) that is capable of rotating an engine (E) in the normal direction and in the reverse direction;
a crank angle detecting unit (70) for detecting crank angles of the engine (E); and
a control unit (111, 113) for starting said starter motor ( 1 ) for allowing the engine to shut down after being rotated in the reverse direction to a position predetermined between the top dead center on the compression stroke immediately before and the range of opening and closing operation of the exhaust valve in response to engine starting operation.

2. An engine starting apparatus comprising:
a starter motor (1) that is capable of rotating an engine (E) in the normal direction and in the reverse direction;
a crank angle detecting unit (70) for detecting crank angles of the engine; and
a control unit (111, 113) for starting said starter motor (1) for allowing the engine to shut down after being rotated in the reverse direction to a position predetermined between the top dead center of the compression stroke immediately before and the range of opening and closing operation of an exhaust valve when shutting down the engine.

3. An engine starting apparatus according to claim 1 or 2, **characterized in that** said control unit (111, 113) is constructed so as to rotate the engine (E) in the reverse direction to said position, and then driving said starter motor (1) at a low torque to energize said engine (E) into the direction of reverse rotation.

4. An engine starting apparatus according to any one of claims 1 to 3, further comprising a detecting unit for determining the fact that the engine (E) is rotated to said position in the reverse direction by the fact that a current being carried in said starter motor ( 1 ) exceeds a predetermined value.

5. An engine starting apparatus according to any one of claims 1 to 3, further comprising a detecting unit for determining the fact that the engine (E) is rotated to said position in the reverse direction is determined by the fact that the speed of change in crank angle is lowered to a predetermined value based on the change in crank angle detected by said crank angle detecting unit (70).
